Europäisches Patentamt

European Patent Office

Office européen des brevets

(19)

(11) **EP 1 419 109 B1**

(12) **EUROPEAN PATENT SPECIFICATION**

(45) Date of publication and mention
of the grant of the patent:
**21.12.2005 Bulletin 2005/51**

(21) Application number: **02757362.5**

(22) Date of filing: **23.08.2002**

(51) Int Cl.⁷: **C02F 1/28**

(86) International application number:
**PCT/US2002/027002**

(87) International publication number:
**WO 2003/018483 (06.03.2003 Gazette 2003/10)**

(54) **PROCESSES FOR MANUFACTURING WATER FILTERS**

PROZESSE ZUR HERSTELLUNG VON WASSERFILTERN

PROCEDES DE FABRICATION DE FILTRES A EAU

(84) Designated Contracting States:
**AT BE BG CH CY CZ DE DK EE ES FI FR GB GR
IE IT LI LU MC NL PT SE SK TR**

(30) Priority: **23.08.2001 US 935810**

(43) Date of publication of application:
**19.05.2004 Bulletin 2004/21**

(73) Proprietor: **THE PROCTER & GAMBLE COMPANY
Cincinnati, Ohio 45202 (US)**

(72) Inventors:
• **MITCHELL, Michael, Donovan
Cincinnati, OH 45251 (US)**
• **COLLIAS, Dimitris, Ioannis
Mason, OH 45040 (US)**

• **BJORKQUIST, David, William
Wyoming, OH 45215 (US)**
• **ZAVERI, Piyush, Narendra
Mason, OH 45040 (US)**
• **WOOLLEY, Matthew, Morgan
Chapel Hill, NC 27517 (US)**

(74) Representative: **Clemo, Nicholas Graham et al
Procter & Gamble Technical Centres Limited
Patent Department
Rusham Park,
Whitehall Lane
Egham, Surrey TW20 9NW (GB)**

(56) References cited:
**US-A- 3 730 885        US-A- 4 960 450
US-A- 5 466 378**

**Description**

FIELD OF THE INVENTION

The present invention relates to the field of processes for manufacturing water filters, and, more particularly, to the field of processes for manufacturing water filters containing activated carbon particles.

BACKGROUND OF THE INVENTION

Water may contain many different kinds of contaminants including, for example, particulates, harmful chemicals, and microbiological organisms, such as bacteria, parasites, protozoa and viruses. In a variety of circumstances, these contaminants must be removed before the water can be used. For example, in many medical applications and in the manufacture of certain electronic components, extremely pure water is required. As a more common example, any harmful contaminants must be removed from the water before it is potable, i.e., fit to consume. Despite modern water purification means, the general population is at risk, and in particular infants and persons with compromised immune systems are at considerable risk.

In the U.S. and other developed countries, municipally treated water typically includes one or more of the following impurities: suspended solids, bacteria, parasites, viruses, organic matter, heavy metals, and chlorine. Breakdown and other problems with water treatment systems sometimes lead to incomplete removal of bacteria and viruses. In other countries, there are deadly consequences associated with exposure to contaminated water, as some of them have increasing population densities, increasingly scarce water resources, and no water treatment utilities. It is common for sources of drinking water to be in close proximity to human and animal waste, such that microbiological contamination is a major health concern. As a result of waterborne microbiological contamination, an estimated six million people die each year, half of which are children under 5 years of age.

In 1987, the U.S. Environmental Protection Agency (EPA) introduced the *"Guide Standard and Protocol* for *Testing Microbiological Water Purifiers"*. The protocol establishes minimum requirements regarding the performance of drinking water treatment systems that are designed to reduce specific health related contaminants in public or private water supplies. The requirements are that the effluent from a water supply source exhibits 99.99% (or equivalently, 4 log) removal of viruses and 99.9999% (or equivalendy, 6 log) removal of bacteria against a challenge. Under the EPA protocol, in the case of viruses, the influent concentration should be $1 \times 10^7$ viruses per liter, and in the case of bacteria, the influent concentration should be $1 \times 10^8$ bacteria per liter. Because of the prevalence of *Escherichia coil* (*E. coli*, bacterium) in water supplies, and the risks associated with its consumption, this microorganism is used as the bacterium in the majority of studies. Similarly, the MS-2 bacteriophage (or simply, MS-2 phage) is typically used as the representative microorganism for virus removal because its size and shape (i.e., about 26 nm and icosahedral) are similar to many viruses. Thus, a filter's ability to remove MS-2 bacteriophage demonstrates its ability to remove other viruses.

Due to these requirements and a general interest in improving the quality of potable water, there is a continuing desire to provide processes for manufacturing water filter materials which are capable of removing bacteria and/or viruses from a fluid.

SUMMARY OF THE INVENTION

A process for producing a water filter material is provided. The process includes the steps set out in claim 1.

**BRIEF DESCRIPTION OF THE DRAWINGS**

While the specification concludes with claims particularly pointing out and distinctly claiming the invention, it is believed that the present invention will be better understood from the following description taken in conjunction with the accompanying drawings in which:

FIG. **1** is a BET nitrogen adsorption isotherm of mesoporous and acidic activated carbon particles CA-10, and mesoporous and basic activated carbon particles TA4-CA-10;
FIG. **2** is a mesopore volume distribution of the particles of FIG. **1**;
FIG. **3** is a point-of-zero-charge graph of the particles of FIG. **1**;
FIG. **4** is a cross sectional side view of an axial flow filter made in accordance with the present invention;
FIG. **5** illustrates the *E. coli* bath concentration as a function of time for the filter particles of FIG. **1**; and
FIG. **6** illustrates the MS-2 bath concentration as a function of time for the filter particles of FIG. **1**.

## DETAILED DESCRIPTION OF THE PREFERRED EMBODIMENTS

### I. Definitions

As used herein, the terms "filters" and "filtration" refer to structures and mechanisms, respectively, associated with microorganism removal (and/or other contaminant removal), via either adsorption and/or size exclusion.

As used herein, the phrase "filter material" is intended to refer to an aggregate of filter particles. The aggregate of the filter particles forming a filter material can be either homogeneous or heterogeneous. The filter particles can be uniformly or non-uniformly distributed (e.g., layers of different filter particles) within the filter material. The filter particles forming a filter material also need not be identical in shape or size and may be provided in either a loose or interconnected form. For example, a filter material might comprise mesoporous and basic activated carbon particles in combination with activated carbon fibers, and these filter particles may be either provided in loose association or partially or wholly bonded by a polymeric binder or other means to form an integral structure.

As used herein, the phrase "filter particle" is intended to refer to an individual member or piece which is used to form at least part of a filter material. For example, a fiber, a granule, a bead, etc. are each considered filter particles herein. Further, the filter particles can vary in size, from impalpable filter particles (e.g., a very fine powder) to palpable filter particles.

As used herein, the terms "microorganism", "microbiological organism" and "pathogen" are used interchangeably. These terms refer to various types of microorganisms that can be characterized as bacteria, viruses, parasites, protozoa, and germs.

As used herein, the phrase "Bacteria Removal Index" (BRI) of filter particles is defined as:

$$\text{BRI} = 100 \times [1 - (\text{bath concentration of } E.\ coli \text{ bacteria at equilibrium}) /$$

$$(\text{control concentration of } E.\ coli \text{ bacteria})],$$

wherein "bath concentration of *E. coli* bacteria at equilibrium" refers to the concentration of bacteria at equilibrium in a bath that contains a mass of filter particles having a total external surface area of 1400 $cm^2$ and Sauter mean diameter less than 55 $\mu$m, as discussed more fully hereafter. Equilibrium is reached when the *E. coli* concentration, as measured at two time points 2 hours apart, remains unchanged to within half order of magnitude. The phrase "control concentration of *E. coli* bacteria" refers to the concentration of *E. coli* bacteria in the control bath, and is equal to $3.7 \times 10^9$ CFU/L. The Sauter mean diameter is the diameter of a particle whose surface-to-volume ratio is equal to that of the entire particle distribution. Note that the term "CFU/L" denotes "colony-forming units per liter", which is a typical term used in *E. coli* counting. The BRI index is measured without application of chemical agents that provide bactericidal effects. An equivalent way to report the removal capability of filter particles is with the "Bacteria Log Removal Index" (BLRI), which is defined as:

$$\text{BLRI} = - \log[1 - (\text{BRI}/100)].$$

The BLRI has units of "log" (where "log" stands for logarithm). For example, filter particles that have a BRI equal to 99.99% have a BLRI equal to 4 log. A test procedure for determining BRI and BLRI values is provided hereafter

As used herein, the phrase "Virus Removal Index" (VRI) for filter particles is defined as:

$$\text{VRI} = 100 \times [1 - (\text{bath concentration of MS-2 phages at equilibrium}) /$$

$$(\text{control concentration of MS-2 phages})],$$

wherein "bath concentration of MS-2 phages at equilibrium" refers to the concentration of phages at equilibrium in a bath that contains a mass of filter particles having a total external surface area of 1400 $cm^2$ and Sauter mean diameter less than 55 $\mu$m, as discussed more fully hereafter. Equilibrium is reached when the MS-2 concentration, as measured at two time points 2 hours apart, remains unchanged to within half order of magnitude. The phrase "control concentration of MS-2 phages" refers to the concentration of MS-2 phages in the control bath, and is equal to $2.07 \times 10^9$ PFU/L. Note that the term "PFU/L" denotes "plaque-forming units per liter", which is a typical term used in MS-2 counting. The VRI index is measured without application of chemical agents that provide virucidal effects. An equivalent way to report the removal capability of filter particles is with the "Viruses Log Removal Index" (VLRI), which is defined as:

$$VLRI = - \log[100 - (VRI/100)].$$

The VLRI has units of "log" (where "log" is the logarithm). For example, filter particles that have a VRI equal to 99.9% have a VLRI equal to 3 log. A test procedure for determining VRI and VLRI values is provided hereafter.

As used herein, the phrase "total external surface area" is intended to refer to the total geometric external surface area of one or more of the filter particles, as discussed more fully hereafter.

As used herein, the phrase "specific external surface area" is intended to refer to the total external surface area per unit mass of the filter particles, as discussed more fully hereafter.

As used herein, the term "micropore" is intended to refer to a pore having a width or diameter less than 2 nm (or equivalently, 20 A).

As used herein, the term "mesopore" is intended to refer to a pore having a width or diameter between 2 nm and 50 nm (or equivalently, between 20 A and 500 A).

As used herein, the term "macropore" is intended to refer to a pore having a width or diameter greater than 50 nm (or equivalently, 500 A).

As used herein, the phrase "total pore volume" and its derivatives are intended to refer to the volume of all the pores, i.e., micropores, mesopores, and macropores. The total pore volume is calculated as the volume of nitrogen adsorbed at a relative pressure of 0.9814 using the BET process (ASTM D 4820 - 99 standard), a process well known in the art.

As used herein, the phrase "micropore volume" and its derivatives are intended to refer to the volume of all micropores. The micropore volume is calculated from the volume of nitrogen adsorbed at a relative pressure of 0.15 using the BET process (ASTM D 4820 - 99 standard), a process well known in the art.

As used herein, the phrase "sum of the mesopore and macropore volumes" and its derivatives are intended to refer to the volume of all mesopores and macropores. The sum of the mesopore and macropore volumes is equal to the difference between the total pore volume and micropore volume, or equivalently, is calculated from the difference between the volumes of nitrogen adsorbed at relative pressures of 0.9814 and 0.15 using the BET process (ASTM D 4820 - 99 standard), a process well known in the art.

As used herein, the phrase "pore size distribution in the mesopore range" is intended to refer to the distribution of the pore size as calculated by the Barrett, Joyner, and Halenda (BJH) process, a process well known in the art.

As used herein, the term "carbonization" and its derivatives are intended to refer to a process in which the non-carbon species in a carbonaceous substance are reduced.

As used herein, the term "activation" and its derivatives are intended to refer to a process in which a carbonized substance is rendered more porous.

As used herein, the term "activated" particles and its derivatives are intended to refer particles that have been subjected to an activation process.

As used herein, the phrase "point of zero charge" is intended to refer to the pH above which the total surface of the carbon particles is negatively charged. A well known test procedure for determining the point of zero charge is set forth hereafter.

As used herein, the term "basic" is intended to refer to filter particles with a point of zero charge greater than 7.

As used herein, the term "acidic" is intended to refer to filter particles with a point of zero charge less than 7.

As used herein, the phrase "mesoporous and basic activated carbon filter particle" is intended to refer to an activated carbon filter particle that has a plurality of mesopores and has a point of zero charge greater than 7.

As used herein, the phrase "mesoporous and acidic activated carbon filter particle" is intended to refer to an activated carbon filter particle that has a plurality of mesopores and has a point of zero charge less than 7.

As used herein, the phrase "converting agent" refers to an agent that reduces the number of oxygen-containing functional groups and/or increases the number of nitrogen-containing functional groups in a material.

II. Mesoporous and Basic Activated Carbon Filter Particles

Unexpectedly it has been found that activated carbon particles which are mesoporous and basic adsorb a larger number of microorganisms compared to that adsorbed by activated carbon particles which are mesoporous but acidic. Although not wishing to be bound by any theory, applicants hypothesize that: 1) the large number of mesopores and/or macropores provide more convenient adsorption sites for the pathogens, their fimbriae, and surface polymers (e.g. proteins, lipopolysaccharides, oligosaccharides and polysaccharides) that constitute the outer membranes, capsids and envelopes of the pathogens, and 2) basic activated carbon surfaces contain the types of functional groups that are necessary to attract a larger number of microorganisms compared to those on an acidic carbon surface. This enhanced adsorption onto mesoporous and basic carbon surfaces might be attributed to the fact that the typical size of the fimbriae, and surface polymers is similar to that of the mesopores and macropores, and that the basic carbon surface attracts the typically negatively-charged microorganisms and functional groups on their surface.

The filter particles can be provided in a variety of shapes and sizes. For example, the filter particles can be provided in simple forms such as granules, fibers, and beads. The filter particles can be provided in the shape of a sphere, polyhedron, cylinder, as well as other symmetrical, asymmetrical, and irregular shapes. Further, the filter particles can also be formed into complex forms such as webs, screens, meshes, non-wovens, wovens, and bonded blocks, which may or may not be formed from the simple forms described above.

Like shape, the size of the filter particle can also vary, and the size need not be uniform among filter particles used in any single filter. In fact, it can be desirable to provide filter particles having different sizes in a single filter. Generally, the size of the filter particles is between about 0.1 μm and about 10 mm, preferably between about 0.2 μm and about 5 mm, more preferably between about 0.4 μm and about 1 mm, and most preferably between about 1 μm and about 500 μm. For spherical and cylindrical particles (e.g., fibers, beads, etc.), the above-described dimensions refer to the diameter of the filter particles. For mesoporous and basic activated carbon particles having substantially different shapes, the above-described dimensions refer to the largest dimension (e.g. length, width, or height).

The filter particles can be made out of any precursor that generates mesopores and macropores during carbonization and activation. For example and not by way of limitation, the filter particles can be wood-based activated carbon particles, coal-based activated carbon particles, peat-based activated carbon particles, pitch-based activated carbon particles, tar-based activated carbon particles, and mixtures thereof.

Activated carbon can display acidic or basic properties. The acidic properties are associated with oxygen-containing functionalities or functional groups, such as, and not by way of limitation, phenols, carboxyls, lactones, hydroquinones, anhydrides, and ketones. The basic properties are associated with functionalities such as pyrones, chromenes, ethers, carbonyls, as well as the basal plane $\pi$ electrons. The acidity or basicity of the activated carbon particles is determined with the "point of zero charge" technique (Newcombe, G., *et al.*, *Colloids and Surfaces* A: *Physicochemical and Engineering Aspects*, **78**. 65-71 (1993)). The technique is further described in section IV hereafter. Filter particles of the present invention have a "point of zero charge in 0.01M aqueous KCl greater than 7, preferably greater than 8, more preferably greater than 9, and most preferably between 9 and 12.

After carbonization and activation, acidic and mesoporous activated carbon particles can be rendered basic by subjecting them to treatment in furnaces. The treatment conditions include temperature, time, atmosphere, and exposure to converting agent. The converting agent can be provided in the form of a liquid or gas pre-treatment and/or form part of the furnace atmosphere. For example, the converting agent can be a nitrogen-containing liquid, such as, and not by way of limitation, urea, methylamine, dimethylamine, triethylamine, pyridine, pyrolidine, ethylenediamine, diethylenetriamine, acetonitrile, and dimethylformamide. The nitrogen-containing liquid can be coated onto or soaked into the filter particles before placement of the filter particles in the furnace. The furnace atmosphere might also contain nitrogen, inert gases, reducing gases, or the converting agents described above.

The treatment temperature, when the carbon particles do not contain any noble metal catalysts (e.g., platinum, gold, palladium) is between 600°C and 1,200°C, preferably between 700°C and 1,100°C, more preferably between 800°C and 1,050°C, and most preferably between 900°C and 1,000°C. If the carbon particles contain noble metal catalysts, the treatment temperature is between 100°C and 800°C, preferably between 200°C and 700°C, more preferably between 300°C and 600°C, and most preferably between 350°C and 550°C. The treatment time is.between 2 minutes and 10 hours, preferably between 5 minutes and 8 hours, more preferably between 10 minutes and 7 hours, and most preferably between 20 minutes and 6 hours. The treatment atmosphere includes hydrogen, carbon monoxide, or ammonia gases. The gas flow rate is between 0.25 standard L/h.g (i.e., standard liters per hour and gram of carbon; 0.009 standard ft$^3$/h.g) and 60 standard L/h.g (2.1 standard ft$^3$/h.g), preferably between 0.5 standard L/h.g (0.018 standard ft$^3$/h.g) and 30 standard L/h.g (1.06 standard ft$^3$/h.g), more preferably between 1.0 standard L/h.g (0.035 standard ft$^3$/h.g) and 20 standard L/h.g (0.7 standard ft$^3$/h.g), and most preferably between 5 standard L/h.g (0:18 standard ft$^3$/h.g) and 10 standard L/h.g (0.35 standard ft$^3$/h.g). As will be appreciated other processes for producing a basic and mesoporous activated carbon filter material can be employed.

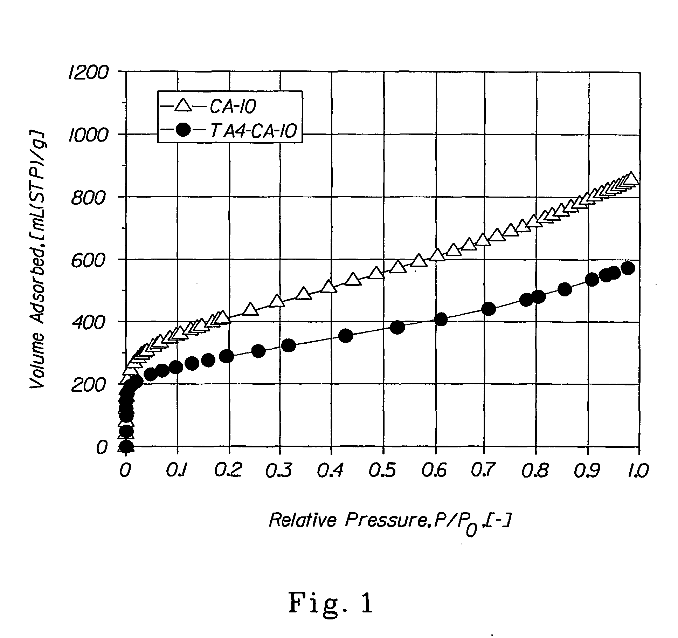

The Brunauer, Emmett and Teller (BET) specific surface area and the Barrett, Joyner, and Halenda (BJH) pore size distribution can be used to characterize the pore structure of the mesoporous and basic activated carbon particles. Preferably, the BET specific surface area of the filter partides is between about 500 m$^2$/g and about 3,000 m$^2$/g, preferably between about 600 m$^2$/g to about 2,800 m$^2$/g, more preferably between about 800 m$^2$/g and about 2,500 m$^2$/g, and most preferably between about 1,000 m$^2$/g and about 2,000 m$^2$/g. Referring to FIG. 1, a typical nitrogen adsorption isotherm, using the BET process, of a mesoporous and basic wood-based activated carbon (TA4-CA-10), and a mesoporous and acidic wood-based activated carbon (CA-10) are illustrated.

The total pore volume of the mesoporous and basic activated carbon particles is measured during the BET nitrogen adsorption and is calculated as the volume of nitrogen adsorbed at a relative pressure, P/P$_0$, of 0.9814. More specifically and as is well known in the art, the total pore volume is calculated by multiplying the "volume of nitrogen adsorbed in mL(STP)/g" at a relative pressure of 0.9814 with the conversion factor 0.00156, that converts the volume of nitrogen at STP (standard temperature and pressure) to liquid. The total pore volume of the mesoporous and basic activated carbon particles is greater than about 0.4 mL/g, or greater than about 0.7 mL/g, or greater than about 1.3 mUg, or greater than about 2 mUg, and/or less than about 3 mUg, or less than about 2.6 mUg, or less than about 2 mUg, or less than about 1.5 mUg.

The sum of the mesopore and macropore volumes is measured during the BET nitrogen adsorption and calculated as the difference between the total pore volume and the volume of nitrogen adsorbed at $P/P_0$ of 0.15. The sum of the mesopore and macropore volumes of the mesoporous and basic activated carbon particles is greater than 0.12 mL/g, or greater than 0.2 mUg, or greater than 0.4 mUg, or greater than 0.6 mUg, or greater than 0.75 mL/g, and/ or less than 2.2 mUg, or less than 2 mL/g, or less than 1.5 mUg, or less than 1.2 mL/g, or less than 1 mL/g.

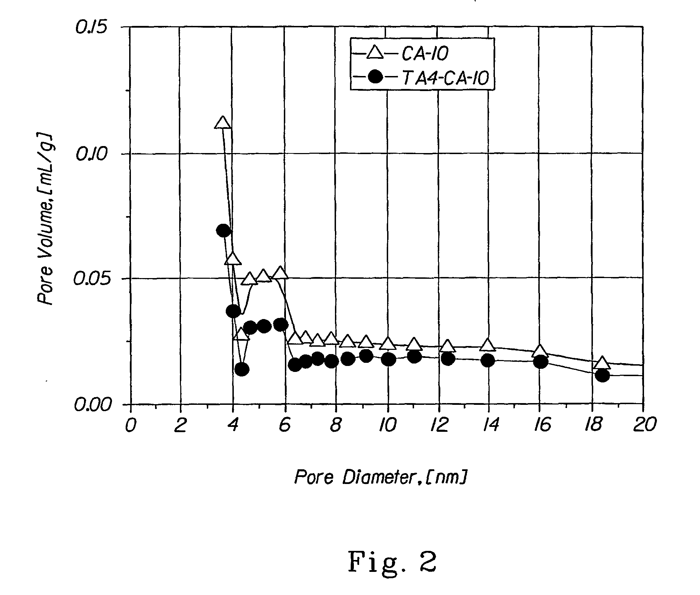

The BJH pore size distribution can be measured using the Barrett, Joyner, and Halenda (BJH) process, which is described in *J. Amer. Chem. Soc.,* **73,** 373-80 (1951) and Gregg and Sing, ADSORPTION, SURFACE AREA, AND POROSITY, 2nd edition, Academic Press, New York (1982). In one embodiment, the pore volume is at least about 0.01 mUg for any pore diameter between about 4 nm and about 6 nm. In an alternate embodiment, the pore volume is between about 0.01 mUg and about 0.04 mL/g for any pore diameter between about 4 nm and about 6 nm. In yet another embodiment, the pore volume is at least about 0.03 mUg for pore diameters between about 4 nm and about 6 nm or is between about 0.03 mUg and about 0.06 mL/g. In a preferred embodiment, the pore volume is between about 0.015 mL/g and about 0.06 mUg for pore diameters between about 4 nm and about 6 nm. FIG. 2 illustrates typical mesopore volume distributions, as calculated by the BJH process, of a mesoporous and basic wood-based activated carbon (TA4-CA-10), and a mesoporous and acidic wood-based activated carbon (CA-10).

The ratio of the sum of the mesopore and macropore volumes to the total pore volume is higher than about 0.3, preferably between about 0.4 and about 0.9, more preferably between about 0.5 and about 0.8, and most preferably between about 0.6 and about 0.7.

The total external surface area is calculated by multiplying the specific external surface area by the mass of the filter particles, and is based on the dimensions of the filter particles. For example, the specific external surface area of mono-dispersed (i.e., with uniform diameter) fibers is calculated as the ratio of the area of the fibers (neglecting the 2 cross sectional areas at the ends of the fibers) and the weight of the fibers. Thus, the specific external surface area of the fibers is equal to: $4/D\rho$, where $D$ is the fiber diameter and p is the fiber density. For monodispersed spherical particles, similar calculations yield the specific external surface area as equal to: $6/D\rho$, where $D$ is the particle diameter and $p$ is the particle density. For poly-dispersed fibers, spherical or irregular particles, the specific external surface area is calculated using the same respective formulae as above after substituting $\bar{D}_{3,2}$ for $D$, where $\bar{D}_{3,2}$ is the Sauter mean diameter, which is the diameter of a particle whose surface-to-volume ratio is equal to that of the entire particle distribution. A process, well known in the art, to measure the Sauter mean diameter is by laser diffraction, for example using the Malvern equipment (Malvern Instruments Ltd., Malvern, U.K.). The specific external surface area of the filter particles is between about 10 cm$^2$/g and about 100,000 cm$^2$/g, preferably between about 50 cm$^2$/g and about 50,000 cm$^2$/g, more preferably between about 100 cm$^2$/g and about 10,000 cm$^2$/g, and most preferably between about 500 cm$^2$/g and about 5,000 cm$^2$/g.

The BRI of the mesoporous and basic activated carbon particles, when measured according to the batch test procedure set forth herein, is greater than about 99%, preferably greater than about 99.9%, more preferably greater than about 99.99%, and most preferably greater than about 99.999%. Equivalently, the BLRI of the mesoporous and basic activated carbon particles is greater than about 2 log, preferably greater than about 3 log, more preferably greater than about 4 log, and most preferably greater than about 5 log. The VRI of the mesoporous and basic activated carbon particles, when measured according to the batch test procedure set forth herein, is greater than about 90%, preferably greater than about 95%, more preferably greater than about 99%, and most preferably greater than about 99.9%. Equivalently, the VLRI of the mesoporous and basic activated carbon particles is greater than about 1 log, preferably greater than about 1.3 log, more preferably greater than about 2 log, and most preferably greater than about 3 log.

In a preferred embodiment of the present invention, the filter particles comprise wood-based, mesoporous and basic activated carbon particles that were initially acidic and rendered basic with treatment in an ammonia atmosphere. The treatment temperature is between about 925°C and 1,000°C, the ammonia flowrate is between about 1 standard L/h.g and about 20 standard L/h.g, and the treatment time is between about 10 minutes and 7 hours. These particles have a BET specific surface area between about 800 m$^2$/g and about 2,500 m$^2$/g, total pore volume between about 0.7 mUg and about 2.5 mUg, and sum of the mesopore and macropore volumes between about 0.21 mL/g and about 1.7 mUg. A nonlimiting example of an acidic activated carbon that is converted to a basic activated carbon is set forth below.

EXAMPLE 1

Conversion of a Mesoporous and Acidic Activated Carbon to a Mesoporous and Basic Activated Carbon

2 kg of the CARBOCHEM® CA-10 mesoporous and acidic wood-based activated carbon particles from Carbochem, Inc., of Ardmore, PA, are placed on the belt of a furnace Model BAC-M manufactured by C. I. Hayes, Inc., of Cranston, RI. The furnace temperature is set to 950°C, the treatment time is 4 hours, and the atmosphere is disassociated ammonia flowing with a volumetric flowrate of 12,800 standard L/h (i.e., 450 standard ft$^3$/h, or equivalently, 6.4 standard L/h.g). The treated carbon particles are called TA4-CA-10, and their BET isotherm, mesopore volume distribution, and point of zero charge analyses are illustrated in FIGS. **1, 2,** and **3,** respectively.

III. Filters of the Present Invention

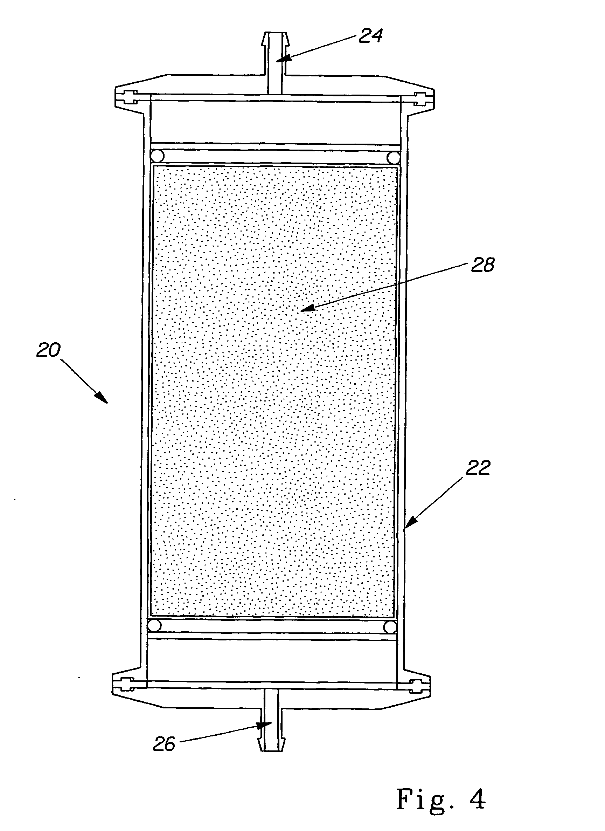

Referring to FIG. **4,** an exemplary filter made in accordance with the present invention will now be described. The filter **20** comprises a housing **22** in the form of a cylinder having an inlet **24** and an outlet **26.** The housing **22** can be provided in a variety of forms, shapes, sizes, and arrangements depending upon the intended use of the filter, as known in the art. For example, the filter can be an axial flow filter, wherein the inlet and outlet are disposed so that the liquid flows along the axis of the housing. Alternatively, the filter can be a radial flow filter wherein the inlet and outlet are arranged so that the fluid flows along a radial of the housing. Still further, the filter can include both axial and radial flows. The housing may also be formed as part of another structure without departing from the scope of the present invention. The filters of the present invention are particularly suited for use with water. The size, shape, spacing, alignment, and positioning of the inlet **24** and outlet **26** can be selected, as known in the art, to accommodate the flow rate and intended use of the filter **20.** Preferably, the filter **20** is configured for use in residential or commercial potable water applications. Examples of filter configurations, potable water devices, consumer appliances, and other water filtration devices suitable for use with the present invention are disclosed in US patent nos. 5,527,451; 5,536,394; 5,709,794; 5,882,507; 6,103,114; 4,969,996; 5,431,813; 6,214,224; 5,957,034; 6,145,670; 6.120,685; and 6,241,899. For potable water applications, the filter **20** is preferably configured to accommodate a flow rate of less than about 8 L/min, or less than about 6 L/min, or between about **2** L/min and about 4 L/min, and the filter contains less than about **2** kg of filter material, or less than **1** kg of filter material, or less than 0.5 kg of filter material. The filter **20** also comprises a filter material **28,** wherein the filter material 28 includes one or more filter particles (e.g., fibers, granules, etc.). One or more of the filter particles can be mesoporous and basic activated carbon particles and possess the characteristics previously discussed. The filter material can also comprise particles formed from other materials, such as activated carbon powders, activated carbon granules, activated carbon fibers, zeolites, and mixtures thereof. As previously discussed, the filter material can be provided in either a loose or interconnected form (e.g., partially or wholly bonded by a polymeric binder or other means to form an integral structure).

IV. Test Procedures

The following test procedures are used to calculate the point of zero charge, BET, BRI/BLRI, and VRI/VLRI values discussed herein. While measurement of the BRI/BLRI and VRI/VLRI values is with respect to an aqueous medium, this is not intended to limit the ultimate use of filter materials of the present invention, but rather the filter materials can ultimately be used with other fluids as previously discussed even though the BRI/BLRI and VRI/VLRI values are calculated with respect to an aqueous medium. Further, the filter materials chosen below to illustrate use of the test procedures are not intended to limit the scope of the manufacture and/or composition of the filter materials of the present invention or to limit which filter materials of the present invention can be evaluated using the test procedures.

BET Test Procedure

The BET specific surface area and pore volume distribution are measured using a nitrogen adsorption technique, such as that described in ASTM D 4820-99 by multipoint nitrogen adsorption, at 77K with a Coulter SA3100 Series Surface Area and Pore Size Analyzer manufactured by Coulter Corp., of Miami, FL. This process can also provide the micropore, mesopore, and macropore volumes. For the TA4-CA-10 filter particles of Example 1, the BET area is 1,038 m$^2$/g, micropore volume is 0.43 mUg, and the sum of the mesopore and macropore volumes is 0.48 mUg. Note that the respective values of the starting material CA-10 are: 1,309 m$^2$/g, 0.54 mUg, and 0.67 mL/g. Typical BET nitrogen isotherm and the mesopore volume distribution for the filter material of Example 1 are illustrated in FIGS. 1 and 2, respectively. As will be appreciated, other instrumentation can be substituted for the BET measurements as is known in the art.

Point Of Zero Charge Test Procedure

A 0.010 M aqueous KCl solution is prepared from reagent grade KCl and water that is freshly distilled under argon gas. The water used for the distillation is deionized by a sequential reverse osmosis and ion exchange treatment.

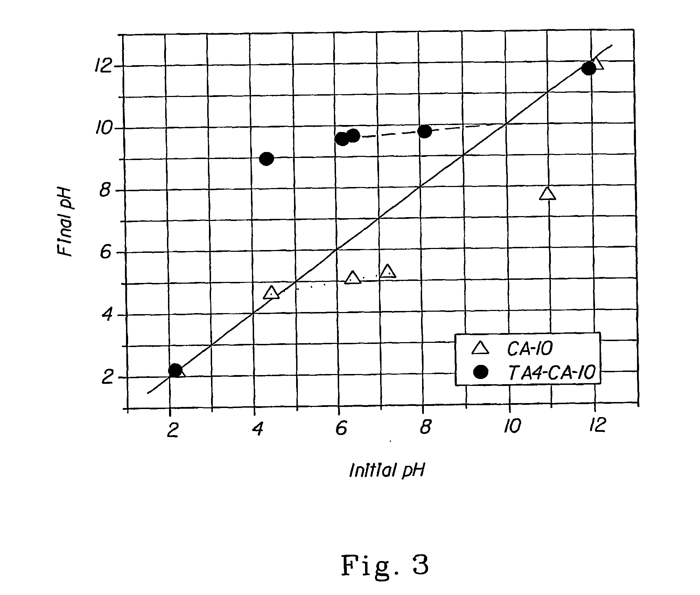

A 25.0 mL volume of the aqueous KCI solution is transferred into six, 125 mL flasks, each fitted with a 24/40 ground glass stopper. Microliter quantities of standardized aqueous HCl or NaOH solutions are added to each flask so that the initial pH ranges between 2 and 12. The pH of each flask is then recorded using an Orion model 420A pH meter with an Orion model 9107BN Triode Combination pH/ATC electrode, manufactured by Thermo Orion Inc., of Beverly, MA, and is called "initial pH". 0.0750 ± 0.0010 g of activated carbon particles are added to each of the six flasks, and the aqueous suspensions are stirred (at about 150 rpm) while stoppered for 24 hours at room temperature before recording the "final pH". FIG. 3 shows the initial and final pH values for the experiments run with CA-10, and TA4-CA-10 activated carbon materials. The point of zero charge for the CA-10 and TA4-CA-10 is about 4.7 and 10, respectively. As will be appreciated, other instrumentation can be substituted for this test procedure as is known in the art.

BRI/BLRI Test Procedure

A PB-900™ Programmable JarTester manufactured by Phipps & Bird, Inc., of Richmomd, VA, with 2 or more Pyrex® glass beakers (depending on the numbers of materials tested) is used. The diameter of the beakers is 11.4 cm (4.5") and the height is 15.3 cm (6"). Each beaker contains 500 mL of dechlorinated, municipally-supplied tap water contaminated with the *E. coli* microorganisms and a stirrer that is rotated at 60 rpm. The stirrers are stainless steel paddles 7.6 cm (3") in length, 2.54 cm (1") in height, and 0.24 cm (3/32") in thickness. The stirrers are placed 0.5 cm (3/16") from the bottom of the beakers. The first beaker contains no filter material and is used as a control, and the other beakers contain sufficient quantity of the filter materials, having a Sauter mean diameter less than 55 $\mu$m, so that the total external geometric surface area of the materials in the beakers is 1400 cm$^2$. This Sauter mean diameter is achieved by a) sieving samples with broad size distribution and higher Sauter mean diameter or b) reducing the size of the filter particles (e.g., if the filter particles are larger than 55 $\mu$m or if the filter material is in an integrated or bonded form) by any size-reducing techniques that are well known to those skilled in the art. For example, and by no way of limitation, size-reducing techniques are crushing, grinding, and milling. Typical equipment that is used for size reduction includes jaw crushers, gyratory crushers, roll crushers, shredders, heavy-duty impact mills, media mills, and fluid-energy mills, such as centrifugal jets, opposed jets or jets with anvils. The size reduction can be used on loose or bonded filter particles. Any biocidal coating on the filter particles or the filter material should be removed before conducting this test. Alternatively, uncoated filter particles can be substituted for this test.

Duplicate samples of water, each 5 mL in volume, are collected from each beaker for assay at various times after insertion of the filter particles in the beakers until equilibrium is achieved in the beakers that contain the filter particles. Typical sample times are: 0, 2, 4 and 6 hours. Other equipment can be substituted as known in the art.

The *E. coli* bacteria used are the ATCC # 25922 (American Type Culture Collection, Rockville, MD). The target *E. coli* concentration in the control beaker is set to be 3.7x10$^9$. The *E. coli* assay can be conducted using the membrane filter technique according to process # 9222 of the 20$^{th}$ edition of the *"Standard Processes for the Examination of Water and Wastewater"* published by the American Public Health Association (APHA), Washington, DC. The limit of detection (LOD) is 1x10$^3$ CFU/L.

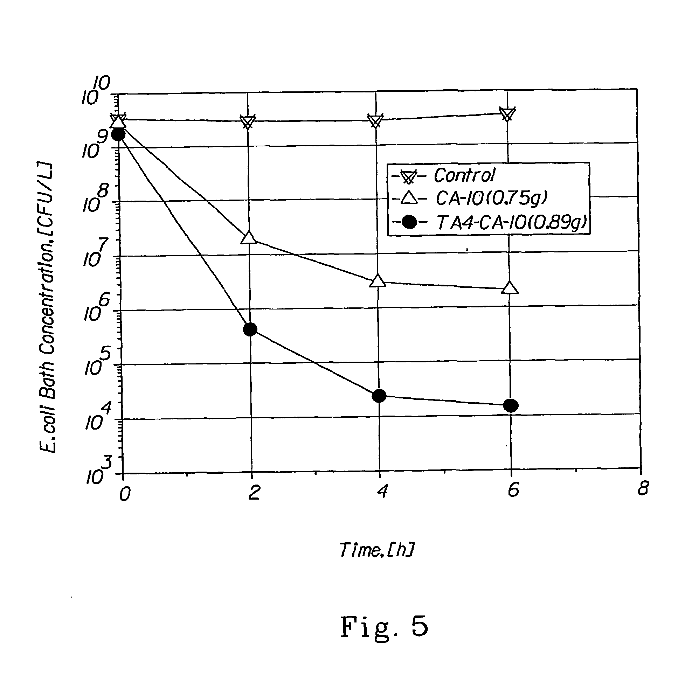

Exemplary BRI/BLRI results for the filter materials of Example 1 are shown in FIG. 5. The amount of the CA-10 mesoporous and acidic activated carbon material is 0.75 g, and that of the TA40-CA-10 mesoporous and basic activated carbon material is 0.89 g. Both amounts correspond to 1,400 cm$^2$ external surface area. The *E. coli* concentration in the control beaker is 3.7x10$^9$ CFU/L. The *E. coli* concentrations in the beakers containing the CA-10 and TA4-CA-10 samples reach equilibrium in 6 hours, and their values are 2.1x10$^6$ CFU/L and 1.5$\times$10$^4$ CFU/L, respectively. Then, the respective BRIs are calculated as 99.94% and 99.9996%, and the respective BLRIs are calculated as 3.2 log and 5.4 log.

VRI/VLRI Test Procedure

The testing equipment and the procedure are the same as in BRI/BLRI procedure. The first beaker contains no filter material and is used as control, and the other beakers contain a sufficient quantity of the filter materials, having a Sauter mean diameter less than 55 $\mu$m, so that there is a total external geometric surface area of 1400 cm$^2$ in the beakers. Any biocidal coating on the filter particles or the filter material should be removed before conducting this test. Alternatively, uncoated filter particles or filter material can be substituted for this test.

The MS-2 bacteriophages used are the ATCC # 15597B from the American Type Culture Collection of Rockville, MD. The target MS-2 concentration in the control beaker is set to be 2.07x10$^9$ PFU/L. The MS-2 can be assayed according to the procedure by C. J. Hurst, *Appl. Environ. Microbiol.,* 60(9), 3462(1994). Other assays known in the art can be substituted. The limit of detection (LOD) is 1x10$^3$ PFU/L.

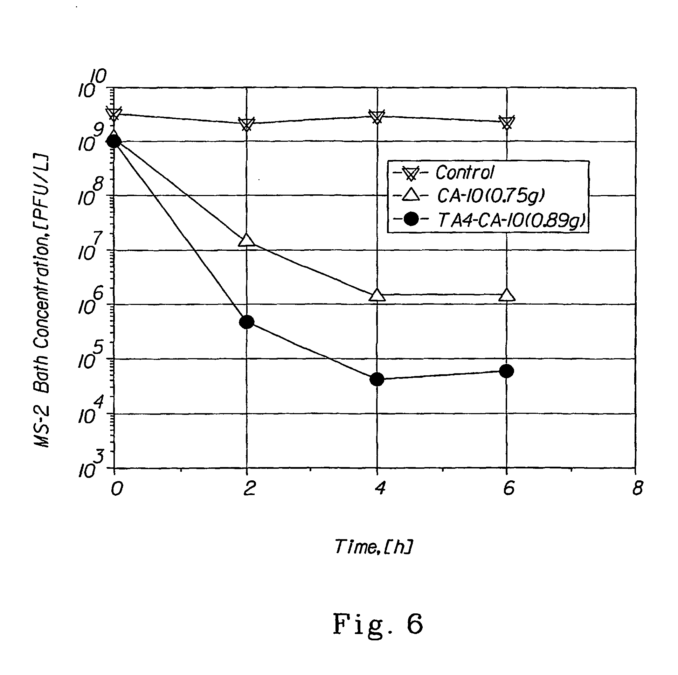

Exemplary VRI/VLRI results for the filter materials of Example 1 are shown in FIG. 6. The amount of the CA-10 mesoporous and acidic activated carbon material is 0.75 g, and that of the TA40-CA-10 mesoporous and basic activated carbon material is 0.89 g. Both amounts correspond to 1,400 cm$^2$ external surface area. The MS-2 concentration in the control beaker is $2.07 \times 10^9$ CFU/L. The MS-2 concentrations in the beakers containing the CA-10 and TA4-CA-10 samples reach equilibrium in 6 hours, and their values are $1.3 \times 10^6$ PFU/L and $5.7 \times 10^4$ PFU/L, respectively. Then, the respective VRIs are calculated as 99.94% and 99.997%, and the respective VLRIs are calculated as 3.2 log and 4.5 log.

The embodiments described herein were chosen and described to provide the best illustration of the principles of the invention and its practical application to thereby enable one of ordinary skill in the art to utilize the invention in various embodiments and with various modifications as are suited to the particular use contemplated. All such modifications and variations are within the scope of the invention as determined by the appended claims when interpreted in accordance with the breadth to which they are fairly, legally and equitably entitled.

## Claims

1. A process for producing a filter (20) for the removal of microorganisms from water, the process comprising the steps of:

   a) providing a plurality of carbon particles having a point of zero charge in 0.01M aqueous KCl of less than 7, wherein the sum of the mesopore and macropore volumes of said plurality of filter particles is greater than 0.12 mL/g;

   b) heating said plurality of carbon particles in a furnace in the presence of a converting agent which reduces the number of oxygen-containing functional groups and/or increases the number of nitrogen-containing functional groups in the particles and thereby converts them to basic particles having a point of zero charge in 0.01M aqueous KCl of greater than 7; and

   c) inserting said plurality of particles into a filter housing (22) having a water inlet (24) and a water outlet (26).

2. The process of Claim 1, further comprising the step of activating said plurality of carbon particles before said step of heating.

3. The process according to any of the preceding claims, wherein said plurality of particles are selected from wood-based carbon particles, coal-based carbon particles, peat-based carbon particles, pitch-based carbon particles, tar-based carbon particles, and mixtures thereof.

4. The process according to any of the preceding claims wherein the converting agent is ammonia.

5. The process according to any of Claims 1 to 3 wherein the converting agent is selected from methylamine, dimethylamine, pyridine, pyrolidine, ethylenediamine, diethylenetriamine, acetonitrile, and dimethylformamide.

6. The process according to any of Claims 1 to 3, wherein said converting agent is selected from urea, triethylamine, and mixtures thereof.

7. The process according to Claim 5 or Claim 6 wherein the particles are exposed to the converting agent before the heating step.

8. The process according to any of the preceding claims, wherein the carbon particles do not contain any noble metal catalysts and the treatment temperature of said furnace is between 600°C and 1,200°C.

9. The process according to any of Claims 1 to 7, wherein the wherein the carbon particles do contain a noble metal catalyst and the treatment temperature of said furnace is between 100°C and 800°C.

10. The process according to any of the preceding claims, wherein the point of zero charge of the particles is between 9 and 12 after said heating step.

## Patentansprüche

1. Verfahren zur Herstellung eines Filters (20) für das Entfernen von Mikroorganismen aus Wasser, umfassend die Schritte des:

a) Bereitstellens einer Vielzahl von Kohlenstoffpartikeln mit einem Ladungsnullpunkt in wässriger 0,01 M KCl-Lösung von weniger als 7, worin die Summe der Volumen der Mesopore und der Makropore der Vielzahl von Filterpartikeln größer als 0,12 ml/g ist;

b) Erwärmens der Vielzahl von Kohlenstoffpartikeln in einem Ofen in der Anwesenheit eines Umwandlungsmittels, das die Anzahl von Sauerstoff enthaltenden funktionellen Gruppen reduziert und/oder die Anzahl von Stickstoff enthaltenden funktionellen Gruppen in den Partikeln erhöht und diese **dadurch** in Grundpartikel umwandelt, die einen Ladungsnullpunkt in wässriger 0,01 M KCl-Lösung größer 7 haben; und

c) Einfügens der Vielzahl von Partikeln in ein Filtergehäuse (22), das einen Wassereinlass (24) und einen Wasserauslass (26) aufweist.

2. Verfahren nach Anspruch 1, weiterhin umfassend den Schritt des Aktivierens der Vielzahl von Kohlenstoffpartikeln vor dem Schritt des Erwärmens.

3. Verfahren nach einem der vorstehenden Ansprüche, worin die Vielzahl von Partikeln aus auf Holz basierenden Kohlenstoffpartikeln, auf Kohle basierenden Kohlenstoffpartikeln, auf Torf basierenden Kohlenstoffpartikeln, auf Pech basierenden Kohlenstoffpartikeln, auf Teer basierenden Kohlenstoffpartikeln und Mischungen davon ausgewählt wird.

4. Verfahren nach einem der vorstehenden Ansprüche, worin das Umwandlungsmittel Ammoniak ist.

5. Verfahren nach einem der Ansprüche 1 bis 3, worin das Umwandlungsmittel aus Methylamin, Dimethylamin, Pyridin, Pyrolidin, Ethylendiamin, Diethylentriamin, Acetonitril und Dimethylformamid ausgewählt wird.

6. Verfahren nach einem der Ansprüche 1 bis 3, worin das Umwandlungsmittel aus Harnstoff, Triethylamin und Mischungen davon ausgewählt wird.

7. Verfahren nach Anspruch 5 oder Anspruch 6, worin die Partikel dem Umwandlungsmittel vor dem Schritt des Erwärmens ausgesetzt werden.

8. Verfahren nach einem der vorstehenden Ansprüche, worin die Kohlenstoffpartikel keine Edelmetallkatalysatoren enthalten und die Temperatur des Ofens zwischen 600 °C und 1.200 °C beträgt.

9. Verfahren nach einem der Ansprüche 1 bis 7, worin die Kohlenstoffpartikel einen Edelmetallkatalysator enthalten und die Temperatur des Ofens zwischen 100 °C und 800 °C beträgt.

10. Verfahren nach einem der vorstehenden Ansprüche, worin der Ladungsnullpunkt der Partikel nach dem Schritt des Erwärmens zwischen 9 und 12 beträgt.

**Revendications**

1. Procédé pour produire un filtre (20) pour l'élimination de microorganismes de l'eau, le procédé comprenant les étapes consistant à:

a) fournir une pluralité de particules de carbone ayant un point de charge nulle dans 0,01 M de KCl aqueux inférieur à 7, où la somme des volumes des mésopores et des macropores de ladite pluralité de particules filtrantes est supérieure à 0,12 mL/g;

b) chauffer ladite pluralité de particules de carbone dans un four en présence d'un agent de conversion qui réduit le nombre de groupes fonctionnels contenant de l'oxygène et/ou augmente le nombre de groupes fonctionnels contenant de l'azote dans les particules et, de ce fait, les convertit en particules basiques ayant un point de charge nulle dans 0,01 M de KCl aqueux supérieur à 7; et

c) introduire ladite pluralité de particules dans un logement de filtre (22) ayant une entrée d'eau (24) et une sortie d'eau (26).

2. Procédé selon la revendication 1, comprenant en outre l'étape consistant à activer ladite pluralité de particules de carbone avant ladite étape consistant à chauffer.

3. Procédé selon l'une quelconque des revendications précédentes, dans lequel ladite pluralité de particules est choisie parmi les particules de carbone provenant du bois, les particules de carbone provenant du charbon, les particules de carbone provenant de la tourbe, les particules de carbone provenant de l'oléorésine, les particules de carbone provenant du goudron et leurs mélanges.

4. Procédé selon l'une quelconque des revendications précédentes, dans lequel l'agent de conversion est de l'ammoniaque.

5. Procédé selon l'une quelconque des revendications 1 à 3, dans lequel l'agent de conversion est choisi parmi le méthylamine, le diméthylamine, la pyridine, la pyrrolidine, l'éthylène-diamine, le diéthylène triamine, l'acétonitrile et le diméthylformamide.

6. Procédé selon l'une quelconque des revendications 1 à 3, dans lequel ledit agent de conversion est choisi parmi l'urée, le triéthylamine et leurs mélanges.

7. Procédé selon la revendication 5 ou la revendication 6, dans lequel les particules sont exposées à l'agent de conversion avant l'étape consistant à chauffer.

8. Procédé selon l'une quelconque des revendications précédentes, dans lequel les particules de carbone ne contiennent aucun catalyseur de métal noble et la température de traitement dudit four est comprise entre 600 °C et 1200 °C.

9. Procédé selon l'une quelconque des revendications 1 à 7, dans lequel les particules de carbone contiennent un catalyseur de métal noble et la température de traitement dudit four est comprise entre 100 °C et 800 °C.

10. Procédé selon l'une quelconque des revendications précédentes, dans lequel le point de charge nulle des particules est compris entre 9 et 12 après ladite étape consistant à chauffer.

Fig. 1

Fig. 2

Fig. 3

Fig. 4

Fig. 5

Fig. 6